# EUROPEAN PATENT SPECIFICATION

(11) **EP 2 316 282 B1**
(45) Date of publication and mention of the grant of the patent: **04.07.2012**
(21) Application number: 09174320.3
(22) Date of filing: 28.10.2009
(51) Int. Cl.: A23L 2/02, A23L 2/38, A23L 2/52, A23C 9/154

(54) **A multiphase jellified beverage composition**
Mehrphasige gelierte Getränkezusammensetzung
Composition de boisson gélifiée multiphase

(43) Date of publication of application: 04.05.2011
(73) Proprietor: Nestec S.A., 1800 Vevey (CH)
(72) Inventor: Bisson, Jean-Pierre, 14000 Caen (FR); Delort, Jean-Marc, 1814 La Tour De Peilz (CH); Marcout, Anne, 14100 Lisieux (FR)

(56) References cited:
- WO-A1-2004/075669
- JP-A- 9 009 891
- JP-A- 2004 215 526
- JP-A- 2004 313 123
- JP-A- 2007 189 922

## Description

### Field of the invention

The present invention concerns a new range of industrial ready-to-drink, preferably chilled, beverages, which exhibit a new attractive aspect, new mouthfeel, and offer an original usage to consumers.

### Background of the invention

Current industrial ready-to-drink (RTD) beverages offer, consists in monophasic liquids, stored at chilled or ambient temperature. These are typically RTD coffee products like Nesfrappé®, RTD juices like Nestle-Boost®.

The preparation of jellified RTD products is know from prior art. These products consist monophasic products. Very often the gel strength is difficult to control ; the patent JP 2004215526 A describes the addition of a solid, non edible, ball into the bottle cap in order to help breaking the gel before drinking.

However, such a solution to provide jellified RTD beverages with consistent and acceptable texture and viscosity, that is also compatible with the drinking action of the consumer, has a big disadvantage : inserting a solid ball into the bottle can be very dangerous, as the ball can be swallowed by the consumer together with the drink, which may result of severe injuries.

It is therefore one main objective of the present invention, to provide the consumers with an attractive jellified ready-to-drink beverage wherein the gel strength and viscosity are compatible with the drinking action, and is suitable for any kind of consumer wish, i.e. a RTD beverage that is not too solid, or not too liquid for the consumer, and which also completely safe for the consumer.

### Summary of the invention

The objective mentioned above is met with a water, juice, and/or milk-based jellified ready-to-drink product characterized in that it comprises at least two separate homogeneous gel masses, wherein adjacent separate gel masses have different gel strengths.

Advantageously, the gel strengths of two adjacent separate gel masses differ by at least 10%, preferably by at least 25%, more preferably by at least 50%. Such a difference will allow one of the two masses to be broken into smaller particles by the stronger gel mass, if a shaking movement is applied to the product by a consumer.

In a highly preferred embodiment of the present invention, each of the separate gel masses comprises a mix of carrageenan and galactomannan, for instance guar gum, wherein:
(i) the concentration of carrageenan is equal or lower than 0.30% by weight of product, preferably equal or lower than 0.15% by weight of product when the product base contains milk, and
(ii) the concentration of galactomannan is comprised between 0.01 % and 0.1 % by weight of product.

Galactomannan is equally essential as carrageenan because it is the combination of this two ingredients which gives the final properties to the product, in terms of viscosity, gel strength, and texture.

The milk base can be constituted by fresh milk, milk powder, vegetable or nut milk, soja milk, or a combination thereof, whereas the juice base can contain fruit and/or vegetable juice, and/or the water base can be a meat and/or fish-containing aqueous phase.

With such bases for the product, it is possible to vary the mixes of gels in the product, and to propose to the consumer a large choice of jellified multiphase products, either salted, or sweetened. Some recipes will be given hereinafter as examples of what types of multiphase jellified products can be obtained.

In one possible embodiment of the present invention, at least one of the gel masses can comprise an ingredient selected from: coffee, tea, plant extracts, cereal, cocoa or chocolate, nut, or a combination thereof. For instance, one of the gel masses can have a coffee or tea aqueous base, or alternatively, one of the gel masses in the product can have a chocolate-containing milk base.

Advantageously in the cases where a sweetening ingredient is to be incorporated into the product recipe, at least one of the gel masses comprises at least one sweetening ingredient selected from the list of:
(i) natural sweeteners such as Momordica Grosvenorii (Mogrosides IV or V), Rooibos extracts, Honeybush extracts, Stevia, Rebaudioside A, Brazzein, Glycyrrhyzic acid and its salts, Curculin, Monellin, Phylloducin, Rubusosides, Mabinlin, dulcoside A, dulcoside B, siamenoside, monatin and its salts (monatin SS, RR, RS, SR), thaumatin, hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, cyclocarioside I, erythritol, and/or other natural polyols such as maltitol, mannitol, lactitol, sorbitol, inositol, Isomalt, xylitol, glycerol, propylene glycol, threitol, galactitol, reduced isomalto-oligosaccharides, palatinose, reduced xylo-oligosaccharides, reduced gentio-oligosaccharides, reduced maltose syrup, or reduced glucose syrup, or a mixture thereof, and/or
(ii) artificial sweeteners, such as Aspartame, Cyclamate, Sucralose, Acesulfame K, neotame, Saccharin, Neohesperidin dihydrochalcone, or mixtures thereof, and/or
(iii) sweet taste improving carbohydrates, chosen from the list of, but not limited to, sucrose, fructose, glucose, maltose, lactose, mannose, galactose, ribose, rhamnose, trehalose, tagatose, high fructose corn syrup (HFCS).

In a particularly preferred embodiment of the present invention, the gel strength of the gel masses at room temperature is comprised between 10 and 400 g, preferably between 20 and 300 g, more preferably between 30 and 320 g.

Such a gel strength should be sufficiently different between two adjacent gel masses in the product, to allow one of the said gel masses to break the other into pieces, and to break itself under manual agitation by a consumer.

The pH of the gel masses is preferably comprised between 3.0 and 7.0, more preferably between 3.5 and 6.5, depending on the constituents of each of the gel masses in the product.

In a particularly preferred embodiment of the invention, the viscosity of adjacent gel masses differs by at least 10%, preferably by at least 25%, more preferably by at least 30%, even more preferably by at least 40%, and most preferably by at least 50%.

Such a difference in viscosities should allow adjacent gel masses in the product to mix with each other during manual agitation of the product by a consumer, such that the gel masses will break into pieces more easily. The lower the viscosity of a gel mass, the easier to be penetrated by the adjacent gel mass. As stated above, the facility of each gel mass to break into pieces will also depend on the gel strength of each of the masses. The stronger the gel mass, the harder to break into pieces.

The viscosity of gel masses is advantageously comprised between 500 and 50000 mPa.s, measured with a Brookfield viscosimeter, at 8°C. Such a viscosity range ensures sufficient flowability of the product, hence allowing the product to be drunk.

In one embodiment of the invention, at least one of the gel masses is completely enclosed into at least another one. This may allow for instance a product configuration where an mass of gel with a high gel strength is included in the centre of a surrounding gel mass, made of two separate layers disposed side by side, and having a lower viscosity and lower gel strength than the inclusion. In this case, when the consumer will shake the product, the inclusion of hard gel will act as a "rupturing ball" into the surrounding gel masses, and break them rapidly to create a mix of the two.

In one possible embodiment, the product can further comprise a topping layer of non jellified, foamy milk-based product, for instance a Chantilly-mousse topping layer. This will allow to create even more attractive and differentiated products.

In one embodiment of the invention, at least one of the gel masses has a viscosity at 8°C that is lower than 1000 mPa.s, measured with a Brookfield viscosimeter at 8°C. This will allow to create a product that is easily drinkable, although not liquid.

The product according to the present invention can be a chilled ready-to-drink beverage product, or alternatively a shelf-stable ready-to-drink beverage product.

The interest of the invention is that the consumer customises the resulting product aspect, according to the shaking strength and duration he applies to the product.

### Detailed description of the invention

As stated previously, the present invention concerns a water, juice, and/or milk-based jellified ready-to-drink product that comprises at least two separate homogeneous gel masses, wherein adjacent separate gel masses have different gel strengths.

Advantageously, the gel strengths of two adjacent separate gel masses differ by at least 10%, preferably by at least 25%, more preferably by at least 50%. Such a difference allows one of the two masses to be broken into smaller particles by the stronger gel mass, if a shaking movement is applied to the product by a consumer.

In a highly preferred embodiment of the present invention, each of the separate gel masses comprises a mix of carrageenan and galactomannan.

The phases composing the product can be either neutral or acidic. They can be water-based, juice-based or milk-based.

In the trials that were performed with a chilled product, the shelf life that was achieved was up to 45 days, at 4 to 8°C storage temperature. The products according to the present invention could also be made shelf-stable at higher temperatures, typically at room temperature for at least 4 weeks.

By shaking more or less the product (which is typically packed into a bottle), the consumer can adapt the appearance of the product before drinking. With no shaking, the consumer can drink the different gel phases one after the other. With little shaking, the gel masses are little broken into big particles, and little mixed one to another. In case the consumer chooses to shake the product vigorously and for a long time (10 seconds or more for instance), the different gel masses are broken into fine particles and mixed one into the other, depending on the thixotropy of the different gel masses in the product.

This innovative product behaviour has been made possible by the association of:
- manufacturing capability: a control of viscosity and gelling kinetics of the gels according to temperature, the dosing capabilities of each individual phase; all these parameters helps ensuring the production of the multiphase product visuals, such that the different phases do not mix unless hand shaking during and after filling the product ;
- the control of the gel strength of each phase by the formulation (in particular specific gel strength ratio between the different phases composing the product, and the easy gel breaking capability of at least one phase).
- the adaptation of the packaging dimensions of format : in particular, if the package containing the product has a big headspace compared to the product volume contents, it will be easier to mix the different gel masses together by shaking. For instance a headspace in the package, representing at least 10% of the total internal volume of the package will ease the mixing process of the different gel masses during shaking.

### Examples

The following table presents various recipes of gel masses that were manufactured according to the present invention. It is to be noted that out of the twelve recipes (J1 to J12) presented herebelow, two of them (J5 and J7) were considered as not acceptable because the gel strength that was measured for at least one of the gel masses was too high, so it would not break easily under manual agitation by a consumer.

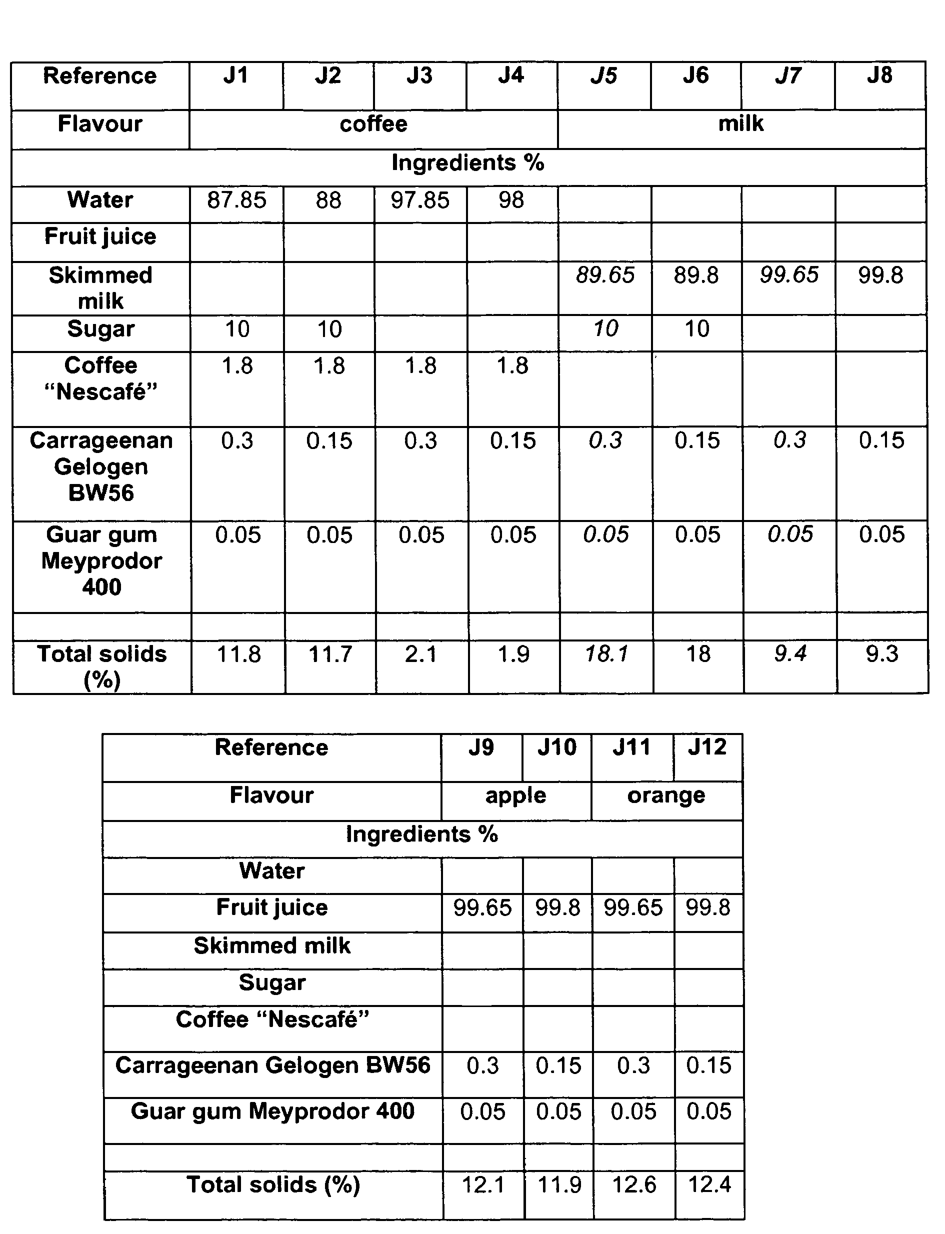

All concentrations are given in percentage by weight of the total gel mass. It is also to be noted that the various gel masses J1 to J4, J6 and J8 and J12 given as examples above, can be mixed to make a finished product according to the invention, and comprising at least two gel masses.

The various gel masses given in example hereinabove have the following characteristics when analyzed.

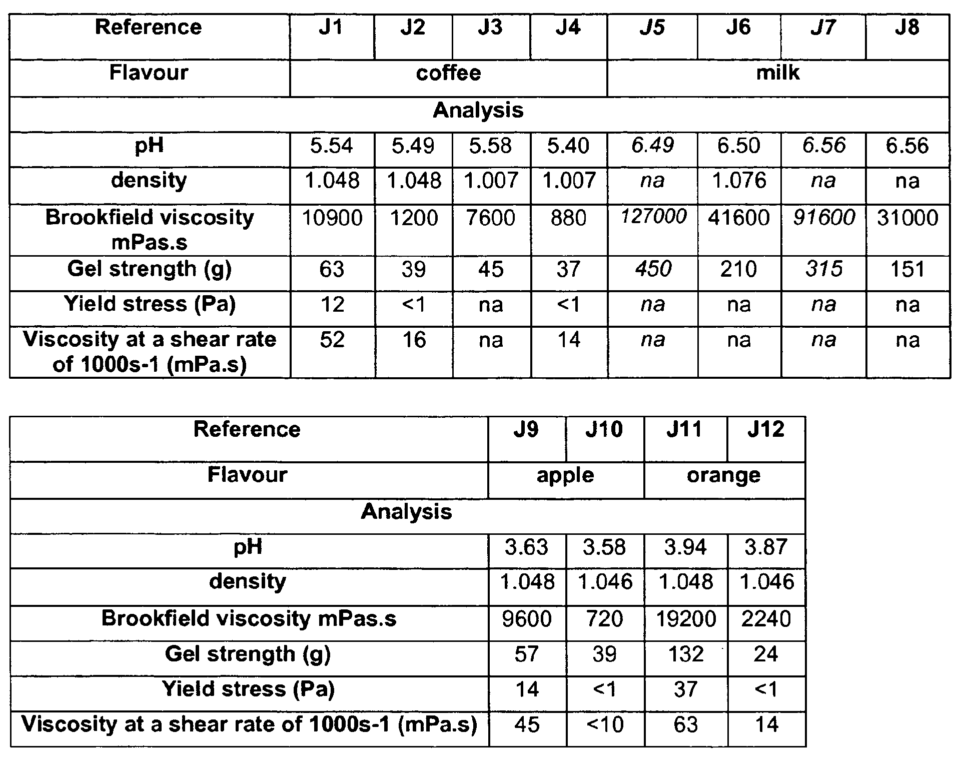

The viscosities mentioned in the recipe examples given above are measured by using a standard Brookfield viscosimeter at a temperature of 8°C, with selected disc diameter / mobile sizes, and rotation speeds, depending on the formulations, as follows:
- J2, J4, J10 and J12 : Mobile 04, speed 50 rpm ;
- J1, J3, J9 and J11 : Mobile 92, speed 5 rpm ;
- J5, J6, J7 and J8 : Mobile 93, speed 5 rpm.

We learn from these results that in the case of coffee-based or fruit juice-based gels, the stabilisers are mostly responsible for the texture, with little impact of the pH or solids content. A low level of carrageenan gives "liquid gels" without yield stress (recipes J2, J4, J10 and J12), while a higher concentration of carrageenan gives soft gels (recipes J1, J3, J9 and J11).

With a milk base, the rheological measurements are less relevant because of the jellified structure and slippery surface, and are therefore marked as "not applicable" (na).

But what can be concluded from the tests is that the synergistic effect between milk and carrageenan gives strong gels in any case, and one can consider that the recipes with 0.15% carrageenan (J6 and J8) are the upper limit for the viscosity range of our product. Thus recipes J5 and J7 are not acceptable as it would be too difficult for a consumer to break the corresponding gel mass and have it mixed with the other gel mass(es) in the product, even with thorough shaking (especially in case of a child or an elderly person having less strength).

Basically, all the gel masses recipes that are considered as acceptable in the field of the present invention, are those which allow a consumer to break the different gel masses into particles of less than 5 mm of average section, and mix the said gel masses, by hand shaking the packaged product for a period of time of less than 30 seconds, preferably less than 15 seconds, and preferably for a period of time comprised between 5 and 10 seconds, for a volume of product which is 500 ml.

The objective of the present invention is to provide a consumer with a product that can be shaken by any type of person being at least 5 years old, in good health without making any abnormal effort.

### Process

The process for manufacturing a product according to the present invention comprises the steps of, in order:
(i) separately preparing at least two liquefied gel compositions, each comprising an aqueous, and/or juicy, and/or dairy base, mixed with carrageenan and galactomannan,
(ii) separately preheating each of the compositions to at least 60°C, preferably at least 70°C for at least 10, preferably 20 seconds,
(iii) separately mixing each of the liquefied gel compositions at a temperature of at least 65°C, preferably at least 70°C, more preferably a temperature comprised between 70 and 75°C, for a period of time comprised between 30 seconds and 5 minutes, preferably for about 2 minutes,
(iv) separately cooling down each of the liquefied gel compositions at a temperature comprised between 40°C and 50°C, preferably at a temperature of 45°C,
(v) separately cooling down each of the liquefied gel compositions at a temperature comprised between 30°C and 38°C, preferably between 33°C and 35°C, more preferably at a temperature of 34°C, while keeping a constant agitation of the mass of each of the liquefied gel compositions,
(vi) sequentially dosing each of the liquefied gel compositions into a container at a temperature lower than 40°C, preferably a temperature below 30°C.

During the manufacturing process of the product, in order to further control the gelling kinetics and the firmness of gels, further tests were performed, focusing on the use of lower quantity of carrageenan, sometimes mixed with galactomannan (e.g. guar) in order to balance the gel firmness versus viscosity. So as can be understood, the level of carrageenan will mainly influence the viscosity (flowability) of the gel masses, while the level of galactomannan will mainly influence the gel strength (ability to break under mechanical constraints).

Unexpectedly, it was observed that for specific concentrations and ratios of carrageenan to guar, it was possible to dose different product phases sequentially, that do not mix during and after filling, and get a spoonable aspect.

Dosing at a temperature below jelling point but in a dynamic state which prevents jellification of the product during the dosing is essential to be able to dose alternatively two gels in the liquid state, which would otherwise not be flowable at this level of temperature. Due to the constant agitation in the gel masses (dynamic state), the flowability is guaranteed for dosing, until each of the gel masses is dosed in the destination packaging. After the dosing step, the agitation is stopped, so that the gel mass is extremely rapidly jellified (i.e. within a few seconds). As a result, two gel masses which are sequentially dosed in the same packaging but with only a few seconds one after the other, do not migrate one into the other.

In other words, the principle is that the phases are dosed alternatively in an instable liquid state at 35-45°C into transparent bottles ; this instable liquid state of the gel masses can be maintained by continuous agitation of the said masses, which brings energy to these masses, thus preventing the jellification to take place ; as soon as the agitation stops, each of the gel masses starts to jellify very rapidly (within a few seconds), so that the gel masses dosed one after the other in a package do not migrate one into the other, although the sequence of dosing of the different gel masses can be quick (a few seconds of interruption between the dosage of two different gel masses), that is to say, compatible with industrial needs of high speed production.

About 30 seconds (or less depending on the gel mass recipe and gelling agent concentration) after dosing, and before starting to migrate into adjacent gel masses, each phase (gel mass) is setting into a solid state.
- Optionally, an additional layer (topping, puree, mousses, other gel with a different colouring or aroma...) can be added on top of this gelled mix to make a bi-layer drink ;
- Then the product is sealed and cooled to 4°C. This cooling step helps achieving the final gel setting of each phase and "solidify" the product ;
- In such a state, the product can be transported, with limited risk of loosing the unmixed phases or layers ;
- The phases will fluidize/break/mix only when the consumer handles the bottle and shakes it during at least 5 to10 seconds.

The present invention provides the following advantages:
- it provides a consumer with multiphase drinkable gels (by multiphase, it is meant that the product comprises different gel masses), with eventually another phase like foam topping, exhibiting an appealing and stable visual appearance until the product is consumed ;
- the product visual appearance can be entirely chosen by the consumer, by choosing to shake the product or not ; the sensation in mouth (or "mouthfeel") can also be freely chosen by the consumer by shaking the product, more or less, or not at all ; typically the texture (gel masses, big particles, small particles, etc), the viscosity (due to the thyxotropic effect in the gel masses, the viscosity can be decreased by shaking) can be freely adapted by the consumer before, or even during consumption (the consumer can choose to re-close the package and shake the product between two gulps) ;
- the manufacturer is able to dose at least two drinkable gel phases in a bottle, without mixing them, while using existing production lines, then let them jellify, so that they remain unmixed during transportation until consumer has the opportunity to consume the product ;
- the product recipes can vary, and involve various ingredient, and for instance, all of the gel masses in the product can be made out of pure natural and tasty ingredients.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A water, juice, and/or milk-based jellified ready-to-drink product **characterized in that** it comprises at least two separate homogeneous gel masses, wherein adjacent separate gel masses have different gel strengths.

2. A product according to claim 1, wherein the gel strengths of two adjacent separate gel masses differ by at least 10%, preferably by at least 25%, more preferably by at least 50%.

3. A product according to any of the preceding claims 1 or 2, wherein each of the separate gel masses comprises a mix of carrageenan and galactomannan, wherein:
(i) the concentration of carrageenan is equal or lower than 0.30% by weight of product, preferably equal or lower than 0.15% by weight of product when the product base contains milk, and
(ii) the concentration of galactomannan is comprised between 0.01% and 0.1 % by weight of product.

4. A product according to any of the preceding claims 1 to 3, wherein the milk base is constituted by fresh milk, milk powder, vegetable or nut milk, soja milk, or a combination thereof.

5. A product according to any of the preceding claims 1 to 4, wherein the juice base contains fruit and/or vegetable juice.

6. A product according to any of the preceding claims 1 to 4, wherein the water base is a meat and/or fish-containing aqueous phase.

7. A product according to any of the preceding claims 1 to 4, wherein at least one of the gel masses comprises an ingredient selected from: coffee, tea, plant extracts, cereal, cocoa or chocolate, nut, or a combination thereof.

8. A product according to any of the preceding claims 1 to 7, wherein at least one of the gel masses comprises at least one sweetening ingredient selected from the list of:
(i) natural sweeteners such as Momordica Grosvenorii (Mogrosides IV or V), Rooibos extracts, Honeybush extracts, Stevia, Rebaudioside A, Brazzein, Glycyrrhyzic acid and its salts, Curculin, Monellin, Phylloducin, Rubusosides, Mabinlin, dulcoside A, dulcoside B, siamenoside, monatin and its salts (monatin SS, RR, RS, SR), thaumatin, hernandulcin, phyllodulcin, glycyphyllin, phloridzin, trilobatin, baiyunoside, osladin, polypodoside A, pterocaryoside A, pterocaryoside B, mukurozioside, phlomisoside I, periandrin I, abrusoside A, cyclocarioside I, erythritol, and/or other natural polyols such as maltitol, mannitol, lactitol, sorbitol, inositol, Isomalt, xylitol, glycerol, propylene glycol, threitol, galactitol, reduced isomalto-oligosaccharides, palatinose, reduced xylo-oligosaccharides, reduced gentio-oligosaccharides, reduced maltose syrup, or reduced glucose syrup, or a mixture thereof, and/or
(ii) artificial sweeteners, such as Aspartame, Cyclamate, Sucralose, Acesulfame K, neotame, Saccharin, Neohesperidin dihydrochalcone, or mixtures thereof, and/or
(iii) sweet taste improving carbohydrates, chosen from the list of, but not limited to, sucrose, fructose, glucose, maltose, lactose, mannose, galactose, ribose, rhamnose, trehalose, tagatose, high fructose corn syrup (HFCS).

9. A product according to any of the preceding claims 1 to 8, wherein the gel strength of the gel masses at room temperature is comprised between 10 and 400 g, preferably between 20 and 300 g, more preferably between 30 and 320 g.

10. A product according to any of the preceding claims 1 to 9, wherein the pH of the gel masses is comprised between 3.0 and 7.0, preferably between 3.5 and 6.5.

11. A product according to any of the preceding claims 1 to 10, wherein the viscosity of adjacent gel masses differs by at least 10%, preferably by at least 25%, more preferably by at least 30%, even more preferably by at least 40%, and most preferably by at least 50%.

12. A product according to any of the preceding claims 1 to 11, wherein the viscosity of gel masses is comprised between 500 and 50000 mPa.s, measured with a Brookfield viscosimeter, at a 8°C.

13. A product according to any of the preceding claims 1 to 12, wherein at least one of the gel masses is completely enclosed into at least another one.

14. A product according to any of the preceding claims, which further comprises a topping layer of non jellified, foamy milk-based product.

15. A product according to any of the claims 1 to 14, wherein at least one of the gel masses has a viscosity at 8°C that is lower than 1000 mPa.s, measured with a Brookfield viscosimeter.

16. A product according to any of the preceding claims 1 to 15, which is a chilled ready-to-drink beverage product.

17. A product according to any of the preceding claims 1 to 15, which is a shelf-stable ready-to-drink beverage product.

## Patentansprüche

1. Ein Wasser, Saft und/oder Milch-basiertes geliertes trinkfertiges Produkt, **dadurch gekennzeichnet, dass** es mindestens zwei separate homogene Gelmassen enthält, wobei benachbarte separate Gelmassen unterschiedliche Gelstärken haben.

2. Produkt nach Anspruch 1, wobei sich die Gelstärken von zwei benachbarten separaten Gelmassen um mindestens 10 %, vorzugsweise um mindestens 25 %, bevorzugter um mindestens 50 % unterscheiden.

3. Produkt nach einem der vorhergehenden Ansprüche 1 oder 2, wobei jede der separaten Gelmassen eine Mischung von Carrageen und Galactomannan enthält, wobei:
i) die Konzentration von Carragen gleich oder niedriger als 0,30 Gew.-% des Produkts, vorzugsweise gleich oder niedriger als 0,15 Gew.-% des Produkts ist, wenn die Produktbasis Milch enthält, und
ii) die Konzentration von Galactomannan zwischen 0,01 Gew.-% und 0,1 Gew.-% des Produkts beträgt.

4. Produkt nach einem der vorhergehenden Ansprüche 1 bis 3, wobei sich die Milchbasis aus Frischmilch, Milchpulver, Pflanzen- oder Nussmilch, Sojamilch oder einer Kombination davon zusammensetzt.

5. Produkt nach einem der vorhergehenden Ansprüche 1 bis 4, wobei die Saftbasis Obst und/oder Gemüsesaft enthält.

6. Produkt nach einem der vorhergehenden Ansprüche 1 bis 4, wobei die Wasserbasis eine fleisch- und/oder fischhaltige wässrige Phase ist.

7. Produkt nach einem der vorhergehenden Ansprüche 1 bis 4, wobei mindestens eine der Gelmassen einen Bestandteil enthält, der ausgewählt ist aus: Kaffee, Tee, Pflanzenextrakten, Cerealien, Kakao oder Schokolade, Nuss, oder einer Kombination davon.

8. Produkt nach einem der vorhergehenden Ansprüche 1 bis 7, wobei mindestens eine der Gelmassen mindestens einen süßenden Bestandteil enthält, der ausgewählt ist aus der Liste von:
i) natürlichen Süßstoffen wie beispielsweise Momordica Grosvenorii (Mogroside IV oder V), Rooibos-Extrakten, Honeybush-Extrakten, Stevia, Rebaudiosid A, Brazzein, Glycyrrhizinsäure und ihren Salzen, Curculin, Monellin, Phylloducin, Rubusosiden, Mabinlin, Dulcosid A, Dulcosid B, Siamenosid, Monatin und seinen Salzen (Monatin SS, RR, RS, SR), Thaumatin, Hernandulcin, Phyllodulcin, Glycyphyllin, Phloridzin, Trilobatin, Baiyunosid, Osladin, Polypodosid A, Pterocaryosid A, Pterocaryosid B, Mukuroziosid, Phlomisosid I, Periandrin I, Abrusosid A, Cyclocariosid I, Erythritol, und/oder anderen natürlichen Polyolen wie beispielsweise Maltit, Mannit, Lactit, Sorbit, Inosit, Isomalt, Xylit, Glycerin, Propylenglykol, Threitol, Galactit, reduzierten Isomaltooligosacchariden, Palatinose, reduzierten Xylooligosacchariden, reduzierten Gentiooligosacchariden, reduziertem Maltosesirup, oder reduziertem Glucosesirup, oder einer Mischung davon, und/oder
ii) künstlichen Süßstoffen, wie beispielsweise Aspartam, Zyklamat, Sucralose, Acesulfam K, Neotam, Saccharin, Neohesperidin-Dihydrochalcon, oder Mischungen davon, und/oder
iii) Süßgeschmack-verbessernden Kohlehydraten, ausgewählt aus der Liste von, aber nicht limitiert auf: Saccharose, Fructose, Glucose, Maltose, Laktose, Mannose, Galaktose, Ribose, Rhamnose, Trehalose, Tagatose, Maissirup mit hohem Fruktosegehalt (HFCS).

9. Produkt nach einem der vorhergehenden Ansprüche 1 bis 8, wobei die Gelstärke der Gelmassen bei Raumtemperatur zwischen 10 und 400 g, vorzugsweise zwischen 20 und 300 g, bevorzugter zwischen 30 und 320 g beträgt.

10. Produkt nach einem der vorhergehenden Ansprüche 1 bis 9, wobei der pH der Gelmassen zwischen 3,0 und 7,0, vorzugsweise zwischen 3,5 und 6,5 beträgt.

11. Produkt nach einem der vorhergehenden Ansprüche 1 bis 10, wobei sich die Viskosität von benachbarten Gelmassen um mindestens 10 %, vorzugsweise um mindestens 25 %, bevorzugter um mindestens 30 %, noch bevorzugter um mindestens 40 %, und am meisten bevorzugt um mindestens 50 % unterscheidet.

12. Produkt nach einem der vorhergehenden Ansprüche 1 bis 11, wobei die Viskosität von Gelmassen zwischen 500 und 50000 mPa·s, gemessen mit einem Brookfield Viskosimeter bei 8 °C, beträgt.

13. Produkt nach einem der vorhergehenden Ansprüche 1 bis 12, wobei mindestens eine der Gelmassen vollständig in mindestens einer anderen eingeschlossen ist.

14. Produkt nach einem der vorhergehenden Ansprüche, das weiterhin eine Deckschicht aus nicht geliertem, schaumigem, milchbasiertem Produkt enthält.

15. Produkt nach einem der Ansprüche 1 bis 14, wobei mindestens eine der Gelmassen eine Viskosität bei 8 °C hat, die niedriger als 1000 mPa·s ist, gemessen mit einem Brookfield Viskosimeter.

16. Produkt nach einem der vorhergehenden Ansprüche 1 bis 15, welches ein gekühltes, trinkfertiges Getränkeprodukt ist.

17. Produkt nach einem der vorhergehenden Ansprüche 1 bis 15, welches ein lagerstabiles, trinkfertiges Getränkeprodukt ist.

## Revendications

1. Produit prêt à boire gélifié à base d'eau, de jus, et/ou de lait **caractérisé en ce qu'**il comprend au moins deux masses de gel homogènes distinctes, dans lequel des masses de gel distinctes adjacentes présentent différentes forces de gel.

2. Un produit selon la revendication 1, dans lequel les forces de gel de deux masses de gel distinctes adjacentes diffèrent d'au moins 10 %, préférablement d'au moins 25 %, plus préférablement d'au moins 50 %.

3. Un produit selon l'une des revendications précédentes 1 ou 2, dans lequel chacune des masses de gel distinctes comprend un mélange de carraghénane et de galacto-mannane, dans lequel :
(i) la concentration de carraghénane est égale ou inférieure à 0,30 % en poids de produit, de préférence égale ou inférieure à 0,15 % en poids de produit lorsque la base de produit contient du lait, et
(ii) la concentration de galacto-mannane est comprise entre 0,01 % et 0,1 % en poids de produit.

4. Un produit selon l'une quelconque des revendications précédentes 1 à 3, dans lequel la base de lait est constituée de lait frais, poudre de lait, lait végétal ou de fruit à coque, lait de soja, ou une combinaison de ceux-ci.

5. Un produit selon l'une quelconque des revendications précédentes 1 à 4, dans lequel la base de jus contient du jus de fruit et/ou du jus végétal.

6. Un produit selon l'une quelconque des revendications précédentes 1 à 4, dans lequel la base d'eau est une phase aqueuse contenant de la viande et/ou du poisson.

7. Un produit selon l'une quelconque des revendications précédentes 1 à 4, dans lequel au moins une des masses de gel comprend un ingrédient sélectionné parmi : café, thé, extraits de plante, céréale, cacao ou chocolat, fruit à coque, ou une combinaison de ceux-ci.

8. Un produit selon l'une quelconque des revendications précédentes 1 à 7, dans lequel au moins une des masses de gel comprend au moins un ingrédient édulcorant sélectionné parmi la liste:
(i) des édulcorants naturels comme par exemple Momordica Grosvenorü (Mogrosides IV ou V), extraits de Rooibos, extraits de Honeybush, Stevia, Rebaudioside A, Brazzéine, acide glycyrrhyzique et ses sels, Curculine, Monelline, Phylloducine, Rubusosides, Mabinline, dulcoside A, dulcoside B, siamenoside, monatine et ses sels (monatine SS, RR, RS, SR), thaumatine, hernandulcine, phyllodulcine, glycyphylline, phloridzine, trilobatine, baiyunoside, osladine, polypodoside A, pterocaryoside A, pterocaryoside B, mukurozioside, phlomisoside I, periandrin I, abrusoside A, cyclocarioside I, érythritol, et/ou d'autres polyols naturels comme par exemple maltitol, mannitol, lactitol, sorbitol, inositol, Isomalt, xylitol, glycérol, propylène glycol, thréitol, galactitol, isomalto-oligosaccharides réduits, palatinose, xylo-oligosaccharides réduits, gentio-oligosaccharides réduits, sirop de maltose réduit, or sirop de glucose réduit, ou un mélange de ceux-ci, et/ou
(ii) des édulcorants artificiels, comme par exemple Aspartame, Cyclamate, Sucralose, Acésulfame K, néotame, Saccharine, Néohespéridine dihydrochalcone, ou des mélanges de ceux-ci, et/ou
(iii) des glucides améliorant le goût sucré, choisis parmi la liste comprenant, mais sans s'y limiter, saccharose, fructose, glucose, maltose, lactose, mannose, galactose, ribose, rhamnose, tréhalose, tagatose, sirop de maïs à haute teneur en fructose (SGHF ou HFCS).

9. Un produit selon l'une quelconque des revendications précédentes 1 à 8, dans lequel la force de gel des masses de gel à température ambiante est comprise entre 10 et 400 g, de préférence entre 20 et 300 g, plus préférablement entre 30 et 320 g.

10. Un produit selon l'une quelconque des revendications précédentes 1 à 9, dans lequel le pH des masses de gel est compris entre 3,0 et 7,0, de préférence entre 3,5 et 6,5.

11. Un produit selon l'une quelconque des revendications précédentes 1 à 10, dans lequel la viscosité de masses de gel adjacentes diffère d'au moins 10 %, préférablement d'au moins 25 %, plus préférablement d'au moins 30 %, encore plus préférablement d'au moins 40 %, et le plus préférablement d'au moins 50 %.

12. Un produit selon l'une quelconque des revendications précédentes 1 à 11, dans lequel la viscosité de masses de gel est comprise entre 500 et 50000 mPa.s, mesurée avec un viscosimètre Brookfield, à 8°C.

13. Un produit selon l'une quelconque des revendications précédentes 1 à 12, dans lequel au moins une des masses de gel est complètement enfermée à l'intérieur d'au moins une autre de celles-ci.

14. Un produit selon l'une quelconque des revendications précédentes, qui comprend en outre une couche de garniture de produit à base de lait, mousseux et non gélifié.

15. Un produit selon l'une quelconque des revendications précédentes 1 à 14, dans lequel au moins une des masses de gel présente une viscosité à 8°C qui est inférieure à 1000 mPa.s, mesurée avec un viscosimètre Brookfield.

16. Un produit selon l'une quelconque des revendications précédentes 1 à 15, qui est un produit de boisson prêt-à-boire réfrigéré.

17. Un produit selon l'une quelconque des revendications précédentes 1 à 15, qui est un produit de boisson prêt à-boire de longue conservation.
